# EUROPEAN PATENT APPLICATION

(11) **EP 1 988 447 A1**
(43) Date of publication of application: **05.11.2008**
(21) Application number: 07251889.7
(22) Date of filing: 04.05.2007
(51) Int. Cl.: G06F 3/041

(54) **In glass touch screen**

(71) Applicant: Research In Motion Limited, Waterloo, Ontario N2L 3W8 (CA)
(72) Inventor: Lowles, Robert, Waterloo Ontario N2T 2J5 (CA); Robinson, Janes Alexander, Elmira, Ontario N3B 3L1 (CA)
(74) Representative: Roberts, Gwilym Vaughan

(57) **Abstract**

These needs, and others, are met by at least one embodiment of the disclosed invention which provides for a touch sensitive screen for an electronic device wherein there is a sparse pattern of sensors disposed within the active area and a dense pattern of sensors disposed within the viewing area. In this configuration, the pixels in the active area may have a larger aspect ratio and provide a more pleasing image while the dense sensors disposed within the viewing area provide more accurate touch sensitivity. Further, the software, or other electronics, used to create the image, may be structured to position menus or other selectable images adjacent to the viewing area. Similarly, certain images, such as icons, can be programmed to be displayed directly under the sensors in the active area. Generally, this configuration provides for the best of both worlds; a bright, clear image with some touch sensitivity in the active area and a sensitive sensor grid in the viewing area where there are no pixels.

## Description

### BACKGROUND

### Field

This invention relates to electrical devices having a touch sensitive screen and, more specifically, to an electronic device having a touch sensitive screen wherein the touch detectors are disposed in a sparse pattern over the screen active area and in a dense pattern over the viewing area of the screen.

### Description of the Related Art

As is well known in the art, users may interact with software or similar constructs through a display screen, or simply "screen." That is, the screen is structured to display images of various command and control functions which the user selects with an input device. For larger electronic devices, such as computers, the user typically utilizes a keyboard and/or mouse. For smaller electronic devices, such as, but not limited to, personal digital assistants or cellular telephones, control was originally limited to a keypad, as a mouse or similar device was not included. Similarly, electronic devices used in public areas, such as, but not limited to, automatic teller machines, also used simple keypads and did not include input devices such as a mouse or a full keyboard.

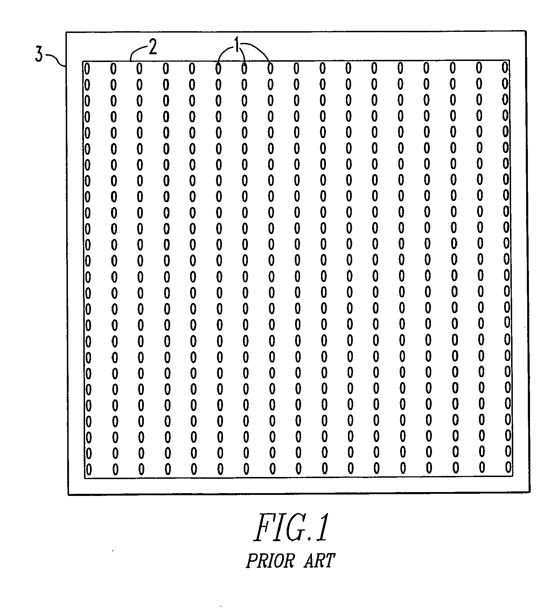

Users, however, desired the simplicity and ease of use associated with mouse or similar input devices. Thus, one improvement over a simple keypad was the use of a touch sensitive screen. One type of touch sensitive screen included sensors in a transparent layer above the screen. This type of device, however, increased the thickness of the screen and reduced the screen's optical performance. "In-glass" touch sensitive screens, however, typically included a plurality of sensors 1 disposed within the screen 2 as shown in Figure 1. It is noted that the sensors are shown schematically and are typically not visible to the naked eye. The sensors, which were typically capacitive, mechanical, or optical sensors, provided a signal when actuated. The sensors are actuated when an object, typically a stylus or a finger, is positioned on, or immediately adjacent to, the screen. The sensors are coupled to a sensor output device which is further coupled to a control assembly. The sensor output device and/or control assembly are structured to interpret the sensor signals to determine the position on the screen over which the object is located. Thus, for example, an electronic device could display an image representing commands, such as icons or a menu, and a user could use a stylus or a finger to select the command simply by touching the portion of the screen displaying the icon of menu. Further, the sensors could also, typically, detect a "tap" which indicated when a selection had been made.

A screen 2, such as, but not limited to, a liquid crystal display (LCD) panel 3, is typically disposed in a frame or housing. The LCD panel utilizes a liquid crystal medium to produce an image formed from a number of small, illuminated points, or pixels, located on a grid. The pixels are spaced as closely together as possible so that the image does not include voids or dark areas. Further, the pixels have an "aspect ratio" that represents the size of the pixel. The screen or LCD panel has an active area that is structured to display images. Disposed about the active area is an inactive area. There are no pixels in the inactive area. Because it is desirable to not have the image abut the frame, a portion of the inactive area is visible to the user. This area is also called the "viewing area." Beneath the frame is a hidden portion of the inactive area that the user cannot see or touch.

As shown in Figure 1, the sensors were typically disposed in a generally constant pattern over the entire active area and viewing area. This pattern is, typically, a dense pattern as the higher the number of sensors, the more accurate the touch sensitivity of the screen. That is, if the sensors were disposed in a sparse pattern, the accuracy of the sensor grid would be reduced and, for example, the controlling software may not be able to accurately identify which icon of menu item the user selected. The use of a dense pattern, however, is a disadvantage as the sensors required space in the active area and, to provide that space, the pixels had to have a reduced aspect ratio. This is a further disadvantage as the software, or other electronics, used to create the image can be structured to limit the locations of the menus or icon to specific portions of the active area, such as an area adjacent to the viewing area.

There is, therefore, a need for a touch sensitive screen for an electronic device that has a reduced number of sensors in the active area.

There is a further need for a touch sensitive screen for an electronic device that has a sparse pattern of sensors in the active area and a dense pattern of sensors in the viewing area.

### Summary of the Invention

These needs, and others, are met by at least one embodiment of the disclosed invention which provides for a touch sensitive screen for an electronic device wherein there is a sparse pattern of sensors disposed within the active area and a dense pattern of sensors disposed within the viewing area. In this configuration, the pixels in the active area may have a larger aspect ratio and provide a more pleasing image while the dense sensors disposed within the viewing area provide more accurate touch sensitivity. Further, the software, or other electronics, used to create the image, may be structured to position menus or other selectable images adjacent to the viewing area. Similarly, certain images, such as icons, can be programmed to be displayed directly under the sensors in the active area. Generally, this configuration provides for the best of both worlds; a bright, clear image with some touch sensitivity in the active area and a sensitive sensor grid in the viewing area where there are no pixels. Further, in use, the user's finger or stylus is disposed generally to the side of the menu as opposed to blocking the menu from view.

### BRIEF DESCRIPTION OF THE DRAWINGS

Figure 1 is a schematic view of a prior art touch sensitive screen having sensors disposed in a constant pattern.

Figure 2 is a schematic, exploded view of an electronic device.

Figure 3 is a schematic view of a touch sensitive screen having sensors disposed in a sparse pattern in the active area and in a dense pattern in the viewing area.

Figure 4 is a schematic view of a touch sensitive screen having sensors disposed in a sparse pattern in the active area and in a dense pattern in the viewing area, and further showing how the displayed image corresponds to the placement of the sensors.

Figure 5 is a schematic view of a touch sensitive screen having sensors generally disposed in a sparse pattern in the active area, in a dense pattern in the viewing area, and having a limited area of dense sensors in the active area.

Figure 6 is a schematic view of a touch sensitive screen having sensors disposed in a sparse pattern in the active area and in an alternate dense pattern in the viewing area.

Figure 7 is a schematic view of a touch sensitive screen having sensors disposed in a sparse pattern in the active area and in an alternate dense pattern in the viewing area.

Similar numerals refer to similar parts throughout the specification.

### Description

As used herein, "touch sensitive" means structured to detect contact or near contact.

As used herein, "coupled" means a link between two or more elements, whether direct or indirect, so long as a link occurs.

As used herein, "directly coupled" means that two elements are directly in contact with each other.

As used herein, an "aspect ratio" it the ratio of a pixel's height divided by the pixel's width.

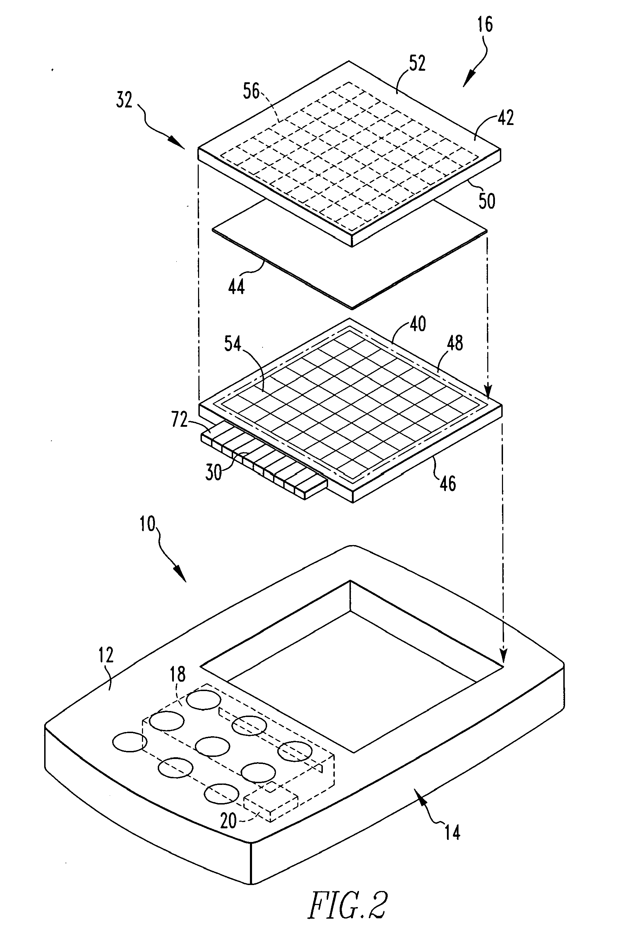

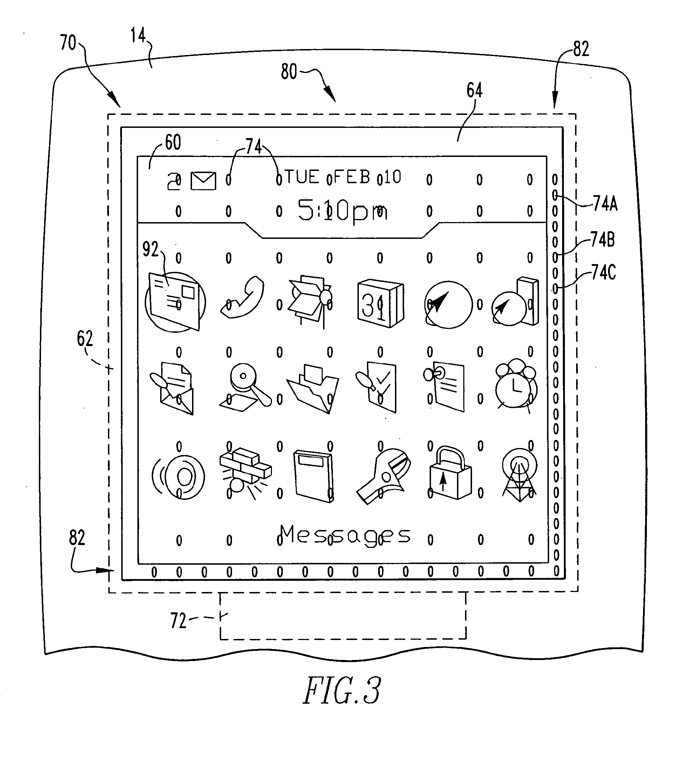

As shown in Figure 2, an electronic device 10, herein represented by a handheld personal digital assistant, includes a housing 12, a control assembly 14, and a display assembly 16. As is known, the control assembly 14 includes a processor 18, memory 20, as well as other components, such as, but not limited to, a circuit board (not shown), structured to link the processor 18, memory 20, and display assembly 16. The control assembly 14 further includes a set of instructions, such as, but not limited to, software, structured to perform various functions including creating images on the display assembly 16 and receiving input from the user. Thus, the control assembly 14 is structured to provide a video input to the display assembly 16 input/output assembly 30 (described below) and to receive sensor output from a sensor assembly 70 (Fig. 3.).

The display assembly 16 includes an input/output assembly 30 and an LCD panel 32. The display assembly input/output assembly 30 is structured to receive a video input from the control assembly 14 and to produce an image on the LCD panel 32. The LCD panel 32 includes a lower substrate 40 and an upper substrate 42 disposed in a close, but spaced, relationship. The LCD panel 32 also includes a liquid crystal layer 44 disposed between the lower and upper substrates 40, 42. Upon application of an electrical charge, the liquid crystal molecules of the liquid crystal layer 44 are structured to align in a generally perpendicular direction with respect to the substrates 40, 42. The lower substrate 40 has a lower, outer surface 46 and an upper, inner surface 48. The upper substrate 42 has a lower, inner surface 50 and an upper, outer surface 52. The lower substrate upper, inner surface 48 has a first electrode 54, also called the pixel electrode, applied thereto. The upper substrate lower, inner surface 50 has a second electrode 56, also called the common electrode, applied thereto. [00027] The first and second electrodes 54, 56 form a grid that defines the aperture size of the pixels. The display assembly input/output assembly 30 selectively controls the location of the charge applied to the first electrode 54 thereby forming images on the LCD panel 32. Typically, the display assembly input/output assembly 30 includes a programmable logic circuit, or integrated circuit, structured to apply a charge to the proper pixels.

The LCD panel 32 only creates an image in the area defined by the overlap of the first and second electrodes 54, 56. The LCD panel 32 has a greater area than the first and second electrodes 54, 56, however. As shown in Figure 3, the area wherein an image is created is the active area 60 of the LCD panel 32. Immediately adjacent to, and surrounding, the active area 60 is an inactive area 62 wherein there are no pixels and no image is created. This area is called the viewing area 64. Typically, the perimeter of the inactive area 62 is disposed below the electronic device housing 12 and cannot be seen or touched by the user during normal operation.

The electronic device 10 (Fig. 2) also includes a sensor assembly 70 (Fig. 3) having an output device 72 and a plurality of detectors 74. As noted above, the detectors 74 are shown schematically and are typically too small to be seen by the naked eye. Each detector 74 is in electrical communication with the output device 72. Each detector 74 creates an output signal when actuated. The detectors 74 are disposed in a pattern, discussed below, and are structured to detect an external object immediately adjacent to, or touching, the LCD panel 32. The external object is typically a stylus or the user's finger (not shown). The output device 72 and/or the control assembly 14 are structured to receive the detector signals and convert the signals to data representing the location of the external object relative to the LCD panel 32. The detectors 74 are typically capacitive detectors 74A, optical detectors 74B, or mechanical detectors 74C. Typically, capacitive detectors 74A are structured to detect a change in capacitance caused by the electrical field of the external object or a change in capacitance caused by the compression of the capacitive detector 74A. Optical detectors 74B are structured to detect a reflection of light, e.g., light created by the LCD panel 32. Mechanical detectors 74C include a charged grid with columns disposed on one side of the LCD panel 32 and a corresponding grid without columns on the opposing side of the LCD panel 32. When the LCD panel 32 is compressed, i.e. as a result of being touched by the user, the columns at the area of compression contact the opposing grid thereby completing a circuit. Capacitive detectors 74A may be disposed upon the lower substrate upper, inner surface 48 or upon the upper substrate upper, outer surface 52. The detectors 74, although small, require space and any pixel adjacent to a detector 74 will have a reduced size, or aperture, to accommodate the adjacent detector 74.

The detectors 74 are disposed in a pattern, preferably in lines wherein multiple lines form a grid. The pattern has at least a first portion 80 and a second portion 82. Detectors 74 in the first portion 80 are disposed over the active area 60. Because the active area 60 also includes the pixels that form the image, the detectors 74 in the first portion 80 are disposed in a sparse pattern so that fewer pixels will have a reduced aspect ratio. Preferably, the spacing of detectors 74 in the first portion 80 is between about 1.0 mm and 10.0 mm between the detectors 74, and more preferably about 3.0 mm between the detectors 74. Conversely, detectors 74 in the second portion 82 are disposed over the viewing area 64. Because the image is not created in the viewing area 64, and therefore there are no pixels to be adversely affected, the detectors 74 in the second portion 82 are disposed in a dense pattern. Preferably, the density of detectors 74 in the second portion 82 is between about 0.5 mm and 6.0 mm between the detectors, and more preferably about 1.0 mm between the detectors.

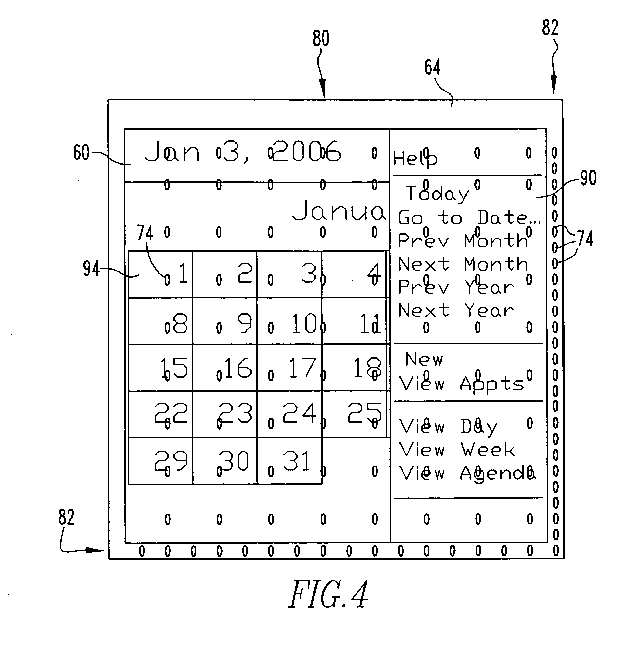

The control assembly 14 is structured to create the image and define the boundaries of selectable portions of the image on the active area 60 of the LCD panel 32. For example, and as shown in Figure 4, the control assembly 14 will, for example, create the image of a pull-down menu 90 or a selectable icon 92 (Fig. 3) on specific portions of the active area 60 of the LCD panel 32. The control assembly 14 is further structured to relate specific detectors 74 to the specific portions of the active area 60 of the LCD panel 32. Thus, when the control assembly 14 detects the actuation of a specific detector 74 adjacent to a specific image, e.g. an icon 92, the control assembly 14 will perform the command related to that icon 92, e.g. opening the calendar program.

As shown in Figures 3 and 4, in one embodiment the detectors 74 in the first portion 80 are disposed in a loose grid and detectors 74 in the second portion 82 are disposed in a dense line extending adjacent to the right-hand side and the bottom side of the active area 60. When the detectors 74 are disposed in this pattern, the control assembly 14 is, preferably, structured to create interactive images having multiple selections, such as, but not limited to, pull-down menus 90 along the right side of the active area 60. Conversely, other interactive images, such as, but not limited to, icons 92 or, as shown, selectable dates 94 on a calendar (Figure 4), are created in the first portion 80 and are created so that each interactive image is located adjacent to a limited number of detectors 74. In this configuration a user may, for example, select a date by touching the desired date. As there is, preferably, only one detector 74 within the image of the date, the output device 72 and/or the control assembly 14 will be able to identify which date is being selected. The user may then, for example, open a pull down menu 90. As the pull-down menu 90 has multiple selections, i.e. menu items, located very close to each other, the user moves the external object along the right side of the active area 60 wherein the detectors 74 in the second portion 82 are disposed in a dense pattern. Because the detectors 74 in the second portion 82 are disposed in a dense pattern, the control assembly 14 will be able to more accurately identify which of the closely disposed menu items is being selected.

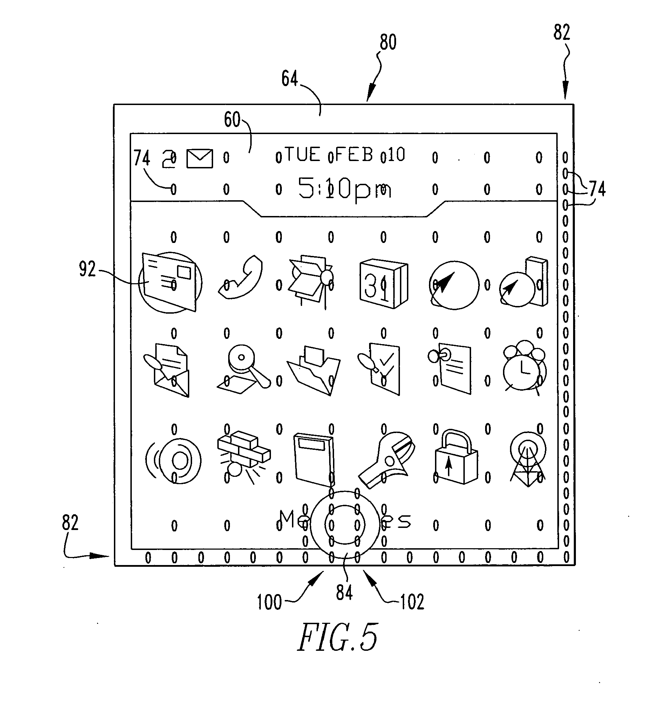

As shown in Figure 5, in another embodiment the pattern of detectors 74 has a first portion 80, a second portion 82, and a third portion 84. The first portion 80 and second portion 82 are substantially similar to the embodiment described above. The third portion 84 is an area of detectors 74 disposed in a dense pattern and located within the active area 60. In this configuration, the third portion 84 is structured to support a virtual control device 100, such as a virtual roller wheel 102 or similar device. The image quality in the third portion 84 is adversely affected for the reasons set forth above. However, the third portion 84 is, preferably, a relatively small area compared to the entire active area 60. Preferably, the density of detectors 74 in the third portion 84 is between about 0.05 mm and 3.0 mm between the detectors, and more preferably about 0.1 mm between the detectors. Further, because the third portion 84 is a dedicated area for the virtual roller wheel 102, it is acceptable to have a reduced pixel density with larger pixels. Since the pixel size would be very large, the aspect ratio could be significantly higher, e.g., about 65 to 98. These pixels would be special function pixels, such as pixels to light up the roller wheel 102 area and other features to highlight the roller wheel 102.

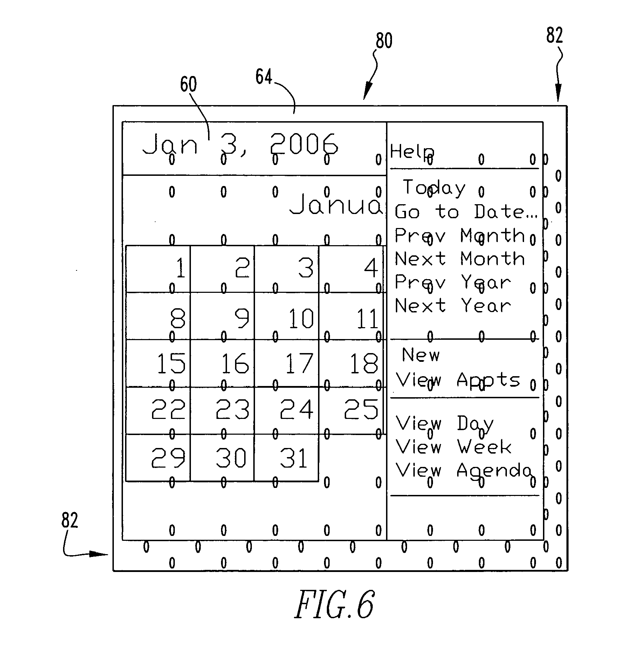

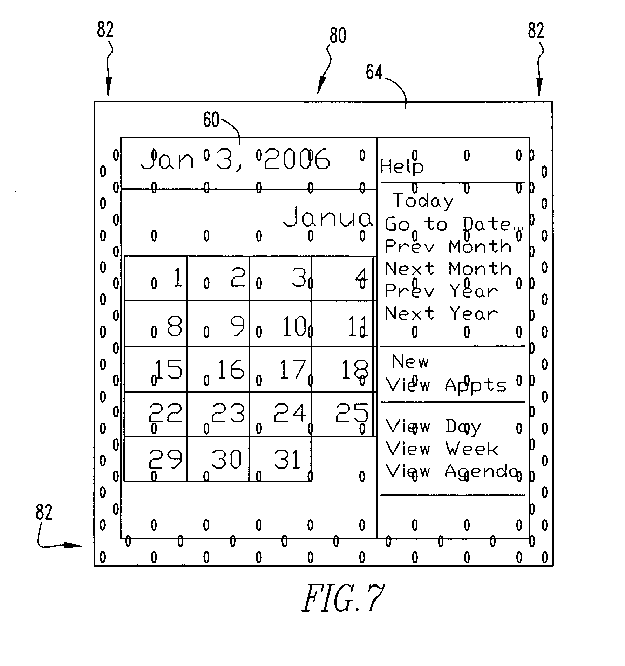

As shown in Figures 3-5, the detectors 74 in the second portion 82 are shown as being in a single straight line. The invention, however, is not so limited. For example, as shown in Figure 6, the detectors 74 in the second portion 82 may be disposed in a dense but alternating pattern having two generally parallel lines of detectors 74. Further, as described above and as shown in Figures 3-5, the detectors 74 in the second portion 82 are disposed in a dense line extending adjacent to the right-hand side and the bottom side of the active area 60. Again, the invention is not so limited and, as shown in Figure 7, the detectors 74 may be disposed on any portion of the viewing area 64 such as, but not limited to, along the left-hand side for use with interactive images that are displayed along the left side of the active area 60. Further, sensors 74 may be disposed along both the left-hand side and the right-hand side so that the user may use either hand, or both hands, to operate the electronic device 10.

While specific embodiments of the disclosed and claimed concept have been described in detail, it will be appreciated by those skilled in the art that various modifications and alternatives to those details could be developed in light of the overall teachings of the disclosure. Accordingly, the particular arrangements disclosed are meant to be illustrative only and not limiting as to the scope of the disclosed and claimed concept which is to be given the full breadth of the claims appended and any and all equivalents thereof.

## Claims

1. A touch sensitive screen for an electronic device, said electronic device having a control assembly structured to provide a video input to a display assembly input/output assembly and to receive sensor output from a sensor assembly, said touch sensitive screen comprising:
a display assembly having an input/output assembly and an LCD panel, said input/output assembly structured to receive a video input from said control assembly and to produce an image on said LCD panel;
said LCD panel having an active area and a viewing area;
a sensor assembly having an output device and a plurality of detectors;
each said detectors structured to detect an object adjacent to said detector and to provide a signal to said output device;
said detectors disposed on said display screen in a pattern having at least a first portion and a second portion;
said detector pattern first portion having a spare dispersion of detectors and disposed over said LCD panel active area;
said detector pattern first portion having a dense dispersion of detectors and disposed over said LCD panel viewing area; and
said sensor output device structured to receive each said sensor signal and to provide a sensor output to said control assembly, said sensor output having data indicating the position of said adjacent object relative to said LCD panel active area and viewing area.

2. The touch sensitive screen of Claim 1, wherein:
the spacing of said detectors in said first portion is between about 1.0 mm and 10.0 mm between detectors; and
the spacing of said detectors in said second portion is between about between about 0.5 mm and 6.0 mm between detectors.

3. The touch sensitive screen of Claim 2, wherein:
the spacing of said detectors in said first portion is about 3.0 mm between detectors; and
the spacing of said detectors in said second portion is about 1.0 mm between detectors.

4. The touch sensitive screen of Claim 2, wherein said detectors are capacitive detectors structured to sense a change in capacitance.

5. The touch sensitive screen of Claim 4, wherein:
said LCD panel includes a lower substrate, a first electrode, a liquid crystal layer, a second electrode, and an upper substrate;
said lower substrate having a lower, outer surface and an upper, inner surface;
said first electrode being disposed upon said lower substrate upper, inner surface;
said capacitive detectors being disposed upon said lower substrate upper, inner surface;
said upper substrate having a lower, inner surface and an upper, outer surface;
said second electrode being disposed upon said upper substrate lower, inner surface;
said lower substrate and said upper substrate disposed in a close, but spaced, relationship; and
said liquid crystal layer disposed between said lower substrate and said upper substrate.

6. The touch sensitive screen of Claim 4, wherein:
said LCD panel includes a lower substrate, a first electrode, a liquid crystal layer, a second electrode, and an upper substrate;
said lower substrate having a lower, outer surface and an upper, inner surface;
said first electrode being disposed upon said lower substrate upper, inner surface;
said upper substrate having a lower, inner surface and an upper, outer surface;
said second electrode being disposed upon said upper substrate lower, inner surface;
said capacitive detectors being disposed upon said upper substrate upper, outer surface;
said lower substrate and said upper substrate disposed in a close, but spaced, relationship; and
said liquid crystal layer disposed between said lower substrate and said upper substrate.

7. The touch sensitive screen of Claim 2, wherein said detectors are optical detectors structured to detect a reflection of light.

8. The touch sensitive screen of Claim 7, wherein:
said LCD panel includes a lower substrate, a first electrode, a liquid crystal layer, a second electrode, and an upper substrate;
said lower substrate having a lower, outer surface and an upper, inner surface;
said first electrode being disposed upon said lower substrate upper, inner surface;
said upper substrate having a lower, inner surface and an upper, outer surface;
said second electrode being disposed upon said upper substrate lower, inner surface;
said optical detectors being disposed upon said lower substrate upper, inner surface;
said lower substrate and said upper substrate disposed in a close, but spaced, relationship; and
said liquid crystal layer disposed between said lower substrate and said upper substrate.

9. The touch sensitive screen of Claim 7, wherein:
said LCD panel includes a lower substrate, a first electrode, a liquid crystal layer, a second electrode, and an upper substrate;
said lower substrate having a lower, outer surface and an upper, inner surface;
said first electrode being disposed upon said lower substrate upper, inner surface;
said upper substrate having a lower, inner surface and an upper, outer surface;
said second electrode being disposed upon said upper substrate lower, inner surface;
said optical detectors being disposed upon said upper substrate lower, inner surface;
said lower substrate and said upper substrate disposed in a close, but spaced, relationship; and
said liquid crystal layer disposed between said lower substrate and said upper substrate.

10. The touch sensitive screen of Claim 4, wherein:
said LCD panel includes a lower substrate, a first electrode, a liquid crystal layer, a second electrode, and an upper substrate;
said lower substrate having a lower, outer surface and an upper, inner surface;
said first electrode being disposed upon said lower substrate upper, inner surface;
said upper substrate having a lower, inner surface and an upper, outer surface;
said second electrode being disposed upon said upper substrate lower, inner surface;
said lower substrate and said upper substrate disposed in a close, but spaced, relationship;
said liquid crystal layer disposed between said lower substrate and said upper substrate;
wherein said second electrode has an aperture pattern so that, when said first electrode and said second electrode are selectively charged, said liquid crystal layer forms defined pixels; and
said pixels in said LCD panel active area have an aspect ratio of about 30 to 65.

11. The touch sensitive screen of Claim 1, wherein said detector pattern includes a third portion, said third portion having a dense dispersion of detectors and disposed over said LCD panel active area, said third portion being smaller than said first portion.

12. The touch sensitive screen of Claim 11, wherein:
the spacing of said detectors in said first portion is between about 1.0 mm and 10.0 mm between detectors;
the spacing of said detectors in said second portion is between about between about 0.5 mm and 6.0 mm between detectors; and
the spacing of said detectors in said third portion is between about between about 0.05 mm and 3.0 mm between detectors.

13. The touch sensitive screen of Claim 12, wherein:
the spacing of said detectors in said first portion is about 3.0 mm between detectors;
the spacing of said detectors in said second portion is about 1.0 mm between detectors; and
the spacing of said detectors in said third portion is about 0.1 mm between detectors.

14. The touch sensitive screen of Claim 12, wherein said detectors are capacitive detectors structured to sense a change in capacitance.

15. The touch sensitive screen of Claim 14, wherein:
said LCD panel includes a lower substrate, a first electrode, a liquid crystal layer, a second electrode, and an upper substrate;
said lower substrate having a lower, outer surface and an upper, inner surface;
said first electrode being disposed upon said lower substrate upper, inner surface;
said capacitive detectors being disposed upon said lower substrate upper, inner surface;
said upper substrate having a lower, inner surface and an upper, outer surface;
said second electrode being disposed upon said upper substrate lower, inner surface;
said lower substrate and said upper substrate disposed in a close, but spaced, relationship; and
said liquid crystal layer disposed between said lower substrate and said upper substrate.

16. The touch sensitive screen of Claim 14, wherein:
said LCD panel includes a lower substrate, a first electrode, a liquid crystal layer, a second electrode, and an upper substrate;
said lower substrate having a lower, outer surface and an upper, inner surface;
said first electrode being disposed upon said lower substrate upper, inner surface;
said upper substrate having a lower, inner surface and an upper, outer surface;
said second electrode being disposed upon said upper substrate lower, inner surface;
said capacitive detectors being disposed upon said upper substrate upper, outer surface;
said lower substrate and said upper substrate disposed in a close, but spaced, relationship; and
said liquid crystal layer disposed between said lower substrate and said upper substrate.

17. The touch sensitive screen of Claim 14, wherein:
said LCD panel includes a lower substrate, a first electrode, a liquid crystal layer, a second electrode, and an upper substrate;
said lower substrate having a lower, outer surface and an upper, inner surface;
said first electrode being disposed upon said lower substrate upper, inner surface;
said upper substrate having a lower, inner surface and an upper, outer surface;
said second electrode being disposed upon said upper substrate lower, inner surface;
said capacitive detectors being disposed upon said upper substrate lower, inner surface;
said lower substrate and said upper substrate disposed in a close, but spaced, relationship; and
said liquid crystal layer disposed between said lower substrate and said upper substrate.

18. The touch sensitive screen of Claim 12, wherein said detectors are optical detectors structured to detect a reflection of light.

19. The touch sensitive screen of Claim 18, wherein:
said LCD panel includes a lower substrate, a first electrode, a liquid crystal layer, a second electrode, and an upper substrate;
said lower substrate having a lower, outer surface and an upper, inner surface;
said first electrode being disposed upon said lower substrate upper, inner surface;
said upper substrate having a lower, inner surface and an upper, outer surface;
said second electrode being disposed upon said upper substrate lower, inner surface;
said optical detectors being disposed upon said upper substrate lower, inner surface;
said lower substrate and said upper substrate disposed in a close, but spaced, relationship; and
said liquid crystal layer disposed between said lower substrate and said upper substrate.

20. The touch sensitive screen of Claim 12, wherein:
said LCD panel includes a lower substrate, a first electrode, a liquid crystal layer, a second electrode, and an upper substrate;
said lower substrate having a lower, outer surface and an upper, inner surface;
said first electrode being disposed upon said lower substrate upper, inner surface;
said upper substrate having a lower, inner surface and an upper, outer surface;
said second electrode being disposed upon said upper substrate lower, inner surface;
said lower substrate and said upper substrate disposed in a close, but spaced, relationship;
said liquid crystal layer disposed between said lower substrate and said upper substrate;
wherein said second electrode has an aperture pattern so that, when said first electrode and said second electrode are selectively charged, said liquid crystal layer forms defined pixels;
said pixels in said first portion have an aspect ratio of about 30 to 65; and
said pixels in said third portion have an aspect ratio of about 10 to 50.

21. The touch sensitive screen of Claim 12, wherein:
said LCD panel includes a lower substrate, a first electrode, a liquid crystal layer, a second electrode, and an upper substrate;
said lower substrate having a lower, outer surface and an upper, inner surface;
said first electrode being disposed upon said lower substrate upper, inner surface;
said upper substrate having a lower, inner surface and an upper, outer surface;
said second electrode being disposed upon said upper substrate lower, inner surface;
said lower substrate and said upper substrate disposed in a close, but spaced, relationship;
said liquid crystal layer disposed between said lower substrate and said upper substrate;
wherein said second electrode has an aperture pattern so that, when said first electrode and said second electrode are selectively charged, said liquid crystal layer forms defined pixels;
said pixels in said first portion have an aspect ratio of about 30 to 65; and
said pixels in said third portion have an aspect ratio of about 65 to 98.

## Amended claims

### Amended claims in accordance with Rule 137(2) EPC.

**1.** A touch sensitive screen for an electronic device (10), said electronic device (10) having a control assembly (14) structured to provide a video input to a display assembly input/output assembly (30) and to receive sensor output from a sensor assembly (70), said touch sensitive screen comprising:
a display assembly (16) having an input/output assembly (30) and an LCD panel (32), said input/output assembly (30) structured to receive a video input from said control assembly (14) and to produce an image on said LCD panel (32);
said LCD panel (32) having an active area (60) and a viewing area (64);
a sensor assembly (70) having an output device (72) and a plurality of detectors (74);
each said detectors (74) structured to detect an object adjacent to said detector (74) and to provide a signal to said output device (72);
said detectors (74) disposed on said display screen (32) in a pattern having at least a first portion (80) and a second portion (82);
said detector pattern first portion (80) having a sparse dispersion of detectors (74) and disposed over said LCD panel active area (60);
said detector pattern second portion (82) having a dense dispersion of detectors (74) and disposed over said LCD panel viewing area (64); and
said sensor output device (72) structured to receive each said sensor signal and to provide a sensor output to said control assembly (14), said sensor output having data indicating the position of said adjacent object relative to said LCD panel active area (60) and viewing area (64).

**2.** The touch sensitive screen of Claim 1, wherein:
the spacing of said detectors (74) in said first portion (80) is between about 1.0 mm and 10.0 mm between detectors (74);
the spacing of said detectors (74) in said second portion (82) is between about 0.5 mm and 6.0 mm between detectors; and
wherein said spacing of said detectors (74) in said first portion (80) is greater than the spacing of said detectors (74) in said second portion (82).

**3.** The touch sensitive screen of Claim 2, wherein:
the spacing of said detectors (74) in said first portion (80) is about 3.0 mm between detectors (74); and
the spacing of said detectors (74) in said second portion (82) is about 1.0 mm between detectors (74).

**4.** The touch sensitive screen of Claim 2, wherein said detectors (74) are capacitive detectors (74A) structured to sense a change in capacitance.

**5.** The touch sensitive screen of Claim 4, wherein:
said LCD panel (32) includes a lower substrate (40), a first electrode (54), a liquid crystal layer (44), a second electrode (56), and an upper substrate (42);
said lower substrate (40) having a lower, outer surface (46) and an upper, inner surface (48);
said first electrode (54) being disposed upon said lower substrate (40) upper, inner surface (48);
said capacitive detectors (74A) being disposed upon said lower substrate (40) upper, inner surface (48);
said upper substrate (42) having a lower, inner surface (50) and an upper, outer surface (52);
said second electrode (56) being disposed upon said upper substrate (42) lower, inner surface (50);
said lower substrate (40) and said upper substrate (42) disposed in a close, but spaced, relationship; and
said liquid crystal layer (44) disposed between said lower substrate (40) and said upper substrate (42).

**6.** the touch sensitive screen of Claim 4, wherein:
said LCD panel (32) includes a lower substrate (40), a first electrode (54), a liquid crystal layer (44), a second electrode (56), and an upper substrate (42);
said lower substrate (40) having a lower, outer surface (46) and an upper, inner surface (48);
said first electrode (54) being disposed upon said lower substrate (40) upper, inner surface (48);
said upper substrate (42) having a lower, inner surface (50) and an upper, outer surface (52);
said second electrode (56) being disposed upon said upper substrate (42) lower, inner surface (50);
said capacitive detectors (74A) being disposed upon said upper substrate (42) upper, outer surface (52);
said lower substrate (40) and said upper substrate (42) disposed in a close, but spaced, relationship; and
said liquid crystal layer (44) disposed between said lower substrate (40) and said upper substrate (42).

**7.** The touch sensitive screen of Claim 2, wherein said detectors (74) are optical detectors (74B) structured to detect a reflection of light.

**8.** The touch sensitive screen of Claim 7, wherein:
said LCD panel (32) includes a lower substrate (40), a first electrode(54) , a liquid crystal layer (44), a second electrode (56), and an upper substrate (42);
said lower substrate (40) having a lower, outer surface (46) and an upper, inner surface (48);
said first electrode (54) being disposed upon said lower substrate (40) upper, inner surface (48);
said upper substrate (42) having a lower, inner surface (50) and an upper, outer surface (52);
said second electrode (56) being disposed upon said upper substrate (42) lower, inner surface (50);
said optical detectors (74B) being disposed upon said lower substrate (40) upper, inner surface (48);
said lower substrate (40) and said upper substrate (42) disposed in a close, but spaced, relationship; and
said liquid crystal layer (44) disposed between said lower substrate (40) and said upper substrate (42).

**9.** The touch sensitive screen of Claim 7, wherein;
said LCD panel (32) includes a lower substrate (40), a first electrode (54), a liquid crystal layer (44), a second electrode (56), and an upper substrate (42);
said lower substrate (40) having a lower, outer surface (46) and an upper, inner surface (48);
said first electrode (54) being disposed upon said lower substrate (40) upper, inner surface (48);
said upper substrate (42) having a lower, inner surface (50) and an upper, outer surface (52);
said second electrode (56) being disposed upon said upper substrate (42) lower, inner surface (50);
said optical detectors (74B) being disposed upon said upper substrate (42) lower, inner surface (50),
said lower substrate (40) and said upper substrate (42) disposed in a close, but spaced, relationship; and
said liquid crystal layer (44) disposed between said lower substrate (40) and said upper substrate (42).

**10.** The touch sensitive screen of Claim 4, wherein:
said LCD panel (32) includes a lower substrate (40), a first electrode (54), a liquid crystal layer (44), a second electrode (56), and an upper substrate (42);
said lower substrate (40) having a lower, outer surface (46) and an upper, inner surface (48);
said first electrode (54) being disposed upon said lower substrate (40) upper, inner surface (48);
said upper substrate (42) having a lower, inner surface (50) and an upper, outer surface (52);
said second electrode (56) being disposed upon said upper substrate (42) lower, inner surface (50);
said lower substrate (40) and said upper substrate (42) disposed in a close, but spaced, relationship;
said liquid crystal layer (44) disposed between said lower substrate (40) and said upper substrate (42);
wherein said second electrode (56) has an aperture pattern so that, when said first electrode (54) and said second electrode (56) are selectively charged, said liquid crystal layer (44) forms defined pixels; and
said pixels in said LCD panel active area (60) have an aspect ratio of about 30 to 65.

**11.** The touch sensitive screen of Claim 1, wherein said detector pattern includes a third portion (84), said third portion (84) having a dense dispersion of detectors (74) and disposed over said LCD panel active area (60), said third portion (84) being smaller than said first portion (80).

**12.** The touch sensitive screen of Claim 11, wherein:
the spacing of said detectors (74) in said first portion (80) is between about 1.0 mm and 10.0 mm between detectors (74);
the spacing of said detectors (74) in said second portion (82) is between about 0.5 mm and 6.0 mm between detectors (74);
the spacing of said detectors (74) in said third portion (84) is between about between about 0.05 mm and 3.0 mm between detectors (74);
wherein said spacing of said detectors (74) in said first portion (80) is greater than the spacing of said detectors (74) in said second portion (82); and
wherein said spacing of said detectors (74) in said first portion (80) is greater than the spacing of said detectors (74) in said third portion (84).

**13.** The touch sensitive screen of Claim 12, wherein:
the spacing of said detectors (74) in said first portion (80) is about 3.0 mm between detectors (74);
the spacing of said detectors (74) in said second portion (82) is about 1.0 mm between detectors (74); and
the spacing of said detectors (74) in said third portion (84) is about 0.1 mm between detector (74).

**14.** The touch sensitive screen of Claim 12, therein said detectors (74) are capacitive detectors (74A) structured to sense a change in capacitance.

**15.** The touch sensitive screen of Claim 14, wherein:
said LCD panel (32) includes a lower substrate (40), a first electrode (54), a liquid crystal layer (44), a second electrode (56), and an upper substrate (42);
said lower substrate (40) having a lower, outer surface (46) and an upper, inner surface (48);
said first electrode (54) being disposed upon said lower substrate (40) upper, inner surface (48);
said capacitive detectors (74A) being disposed upon said lower substrate (40) upper, inner surface (48);
said upper substrate (42) having a lower, inner surface (50) and an upper, outer surface (52);
said second electrode (56) being disposed upon said upper substrate (42) lower, inner surface (50);
said lower substrate (40) and said upper substrate (42) disposed in a close, but spaced, relationship; and
said liquid crystal layer (44) disposed between said lower substrate (40) and said upper substrate (42).

**16.** The touch sensitive screen of Claim 14, wherein:
said LCD panel (32) includes a lower substrate (40), a first electrode (54), a liquid crystal layer (44), a second electrode (56), and an upper substrate (42);
said lower substrate (40) having a lower, outer surface (46) and an upper, inner surface (48);
said first electrode (54) being disposed upon said lower substrate (40) upper, inner surface (48);
said upper substrate (42) having a lower, inner surface (50) and an upper, outer surface (52);
said second electrode (56) being disposed upon said upper substrate (42) lower, inner surface (50);
said capacitive detectors (74A) being disposed upon said upper substrate (42) upper, outer surface (52);
said lower substrate (40) and said upper substrate (42) disposed in a close, but spaced, relationship; and
said liquid crystal layer (44) disposed between said lower substrate (40) and said upper substrate (42).

**17.** The touch sensitive screen of Claim 14, wherein:
said LCD panel (32) includes a lower substrate (40), a first electrode (54), a liquid crystal layer (44), a second electrode (56), and an upper substrate (42);
said lower substrate (40) having a lower, outer surface (46) and an upper, inner surface (48);
said first electrode (54) being disposed upon said lower substrate (40) upper, inner surface (48);
said upper substrate (42) having a lower, inner surface (50) and an upper, outer surface (52);
said second electrode (56) being disposed upon said upper substrate (42) lower, inner surface (50);
said capacitive detectors (74A) being disposed upon said upper substrate (42) lower, inner surface (50);
said lower substrate (40) and said upper substrate (42) disposed in a close, but spaced, relationship; and
said liquid crystal layer (44) disposed between said lower substrate (40) and said upper substrate (42).

**18.** The touch sensitive screen of Claim 12, wherein said detectors (74) are optical detectors (74B) structured to detect a reflection of light.

**19.** The touch sensitive screen of Claim 18, wherein:
said LCD panel (32) includes a lower substrate (40), a first electrode (54), a liquid crystal layer (44), a second electrode (56), and an upper substrate (42);
said lower substrate (40) having a lower, outer surface (46) and an upper, inner surface (48);
said first electrode (54) being disposed upon said lower substrate (40) upper, inner surface (48);
said upper substrate (42) having a lower, inner surface (50) and an upper, outer surface (52);
said second electrode (56) being disposed upon said upper substrate (42) lower, inner surface (50);
said optical detectors (74B) being disposed upon said upper substrate (42) lower, inner surface (50);
said lower substrate (40) and said upper substrate (42) disposed in a close, but spaced, relationship; and
said liquid crystal layer (44) disposed between said lower substrate (40) and said upper substrate (42).

**20.** The touch sensitive screen of Claim 12, wherein:
said LCD panel (32) includes a lower substrate (40), a first electrode (54), a liquid crystal layer (44), a second electrode (56), and an upper substrate (42);
said lower substrate (40) having a lower, outer surface (46) and an upper, inner surface (48);
said first electrode (54) being disposed upon said lower substrate (40) upper, inner surface (48);
said upper substrate (42) having a lower, inner surface (50) and an upper, outer surface (52);
said second electrode (56) being disposed upon said upper substrate (42) lower, inner surface (50);
said lower substrate (40) and said upper substrate (42) disposed in a close, but spaced, relationship;
said liquid crystal layer (44) disposed between said lower substrate (40) and said upper substrate (42);
wherein said second electrode (56) has an aperture pattern so that, when said first electrode (54) and said second electrode (56) are selectively charged, said liquid crystal layer (44) forms defined pixels;
said pixels in said first portion (80) have an aspect ratio of about 30 to 65; and
said pixels in said third portion (84) have an aspect ratio of about 10 to 50.

**21.** The touch sensitive screen of Claim 12, wherein:
said LCD panel (32) includes a lower substrate (40), a first electrode (54), a liquid crystal layer (44), a second electrode (56), and an upper substrate (42);
said lower substrate (40) having a lower, outer surface (46) and an upper, inner surface (48);
said first electrode (54) being disposed upon said lower substrate (40) upper, inner surface (48);
said upper substrate (42) having a lower, inner surface (50) and an upper, outer surface (52);
said second electrode (56) being disposed upon said upper substrate (42) lower, inner surface (50);
said lower substrate (40) and said upper substrate (42) disposed in a close, but spaced, relationship;
said liquid crystal layer (44) disposed between said lower substrate (40) and said upper substrate (42);
wherein said second electrode (56) has an aperture pattern so that, when said first electrode (54) and said second electrode (56) are selectively charged, said liquid crystal layer (44) forms defined pixels;
said pixels in said first portion (80) have an aspect ratio of about 30 to 65; and
said pixels in said third portion (84) have an aspect ratio of about 65 to 98.
